# EUROPEAN PATENT APPLICATION

(11) **EP 2 058 442 A2**
(43) Date of publication of application: **13.05.2009**
(21) Application number: 08253613.7
(22) Date of filing: 05.11.2008
(51) Int. Cl.: E03B 7/09

(54) **Water flow control apparatus**

(30) Priority: 06.11.2007 GB 0721742
(71) Applicant: RGE Engineering Co, Cambridgeshire PE29 2AF (GB)
(72) Inventor: Dickinson, Martin , RGE Engineering Co., Huntingdon, Cambs PE29 2AF (GB)
(74) Representative: Abraham, Richard

(57) **Abstract**

A system (10) for controlling flow of water in a building, comprising: inlet means (20) for connection to a water supply; outlet means (30)connected to the inlet means (20); valve means (40) for controlling flow of water from the inlet means (20) to the outlet means (30), the valve means (40) being configured to maintain a closed configuration to prevent flow of water from the inlet means (20) to the outlet means (30) in the absence of a genuine water demand being determined by the system (10); sensor means (50) for sensing a rate of flow in the system (10), the sensor means (50) being configured to provide an output representative of a rate of flow sensed; and control means (60) configured to receive the output from the sensor means (50) and open the valve means (40) to allow flow from the inlet means (20) to the outlet means (30) if the received output from the sensor means (50) exceeds a predetermined threshold rate; wherein the outlet means (30) comprises water storage means (80) for providing an initial supply of pressurised water to the building when the valve means (40) is in its closed configuration, the water storage means (80) comprising: chamber means (84) for storing water received from the inlet means (20); and pressurisation means (100) for pressurising water.

## Description

The present invention relates to a system for controlling flow of water in a building (e.g. domestic building) and apparatus therefor.

Domestic flooding and water wastage are common problems. Flooding often occurs as a result of faulty plumbing or a fault in an appliance (e.g. washing machine, dishwasher or toilet), but may also occur by accident (e.g. when an occupier of a home leaves a tap running). Water wastage commonly occurs as a result of leaking taps or a fault in an appliance (e.g. toilet) .

Numerous systems have been developed over the years in an attempt to minimise damage caused by domestic floods. However, the majority of systems known in the art operate to disconnect a mains water supply when a water demand exceeding a predetermined threshold has been identified by the system. Accordingly, few systems in the art are able to adequately detect and prevent low-level leaks (e.g. as caused by a dripping tap).

One proposed solution to this problem is to provide a flood detection system which operates to disconnect a building from a mains water supply and only connects the building to the mains water supply when a genuine water demand is identified. Examples of such systems are disclosed in FR 2694087, US 2005/0224118 and US 2004/0206405. However, the systems proposed in these documents all suffer from either high complexity or high sensitivity to low-level water demands. Furthermore, systems employing conventional flow or pressure sensors are expensive to manufacture due to the cost of providing high sensitivity sensors suitable for use with mains water pressure.

The present applicant has identified the need for an improved water flow control system which overcomes or at least alleviates some of the problems associated with the

### prior art.

In accordance with a first aspect of the present invention there is provided a system for controlling flow of water in a building, comprising: inlet means for connection to a water supply; outlet means connected to the inlet means; valve means for controlling flow of water from the inlet means to the outlet means; sensor means for sensing a rate of flow in the system, the sensor means being configured to provide an output representative of a rate of flow sensed; and control means configured to receive the output from the sensor means and open the valve means to allow flow from the inlet means to the outlet means if the received output from the sensor exceeds a predetermined threshold rate; wherein the outlet means comprises water storage means comprising: chamber means for storing water received from the inlet means; and pressurisation means for pressurising water received in the chamber means.

In this way, a system for controlling water flow is provided which is operable to distinguish between a rate of flow indicative of a genuine water demand and a rate of flow indicative of unwanted low-level water loss, and connect the inlet means to the water supply only when a genuine water demand is identified, whilst also allowing for very low level water loss (e.g. resulting from evaporation from the system) or a genuine low water demand placed on the system.

The volume of the initial supply of pressurised water provided by the water storage means may depend upon a number of factors including the nature of the building in which the system is to be installed. In practice, the volume of the initial supply of pressurised water may be selected to be a low-level volume of water which is safe to release into the building in the event of a low-level leak drawing the entire volume of water from the water storage means whilst providing sufficient volume for the control means to determine the nature of a low-level demand. For example, the water storage means may be configured to provide a maximum volume of less than around 0.5 litres. In another embodiment, the water storage means is configured to provide a maximum volume of less than around 0.25 litres. In yet another embodiment, the water storage means may be configured to provide a maximum volume of less than around 0.15 litres. The maximum volume provided by the water storage means may be determined by the maximum capacity of the chamber means or by control means for limiting flow of water from the water storage means. In one embodiment, the sensor means is configured to sense the rate of flow in the system by sensing a rate of loss of pressure in the system. For example, the sensor means may comprise a pressure sensor for directly measuring pressure loss or a flow sensor for indirectly measuring pressure loss.

The system may further comprise alarm means for providing an alarm signal when an output below the predetermined threshold rate' has been detected by the control means. The control means may be configured to activate the alarm means only if the output below the predetermined threshold rate occurs for at least a predetermined period of time. For example, the control means may be configured to activate the alarm means only once water stored in the chamber means falls below a predetermined volume. In one embodiment, the alarm means may only be activated once the chamber means is substantially empty. The alarm signal may be an audible and/or visual signal. For example, the alarm means may comprise an LED.

The outlet means may comprise a bifurcated conduit having a first branch connected to the water storage means and a second branch connected to an outlet aperture. In this way, filing of the water storage means may occur in parallel to water delivery through the outlet means.

The water storage means may comprise water storage valve means for controlling flow of water into the chamber means. The water storage valve means may be configured to allow water to flow into the chamber means at a rate lower than water flows out of the chamber means. For example, the water supply valve means may comprise a two-way valve having a first configuration when water flows into the chamber means and a second configuration when water flows out of the chamber, the two-way valve acting to restrict flow in the first configuration relative to the second configuration. The two-way valve may be configured to move between the first and second configurations automatically in dependence upon which direction water is flowing through the two-way valve. For example, the two-way valve may comprise a moveable restriction which is forced by passing water to move from an inoperative configuration to an operative configuration when water flows in a first direction relative to the two-way valve, and from the operative configuration to the inoperative position when water flows in a second (e.g. opposed) direction.

The pressurisation means may comprise piston means movably housed in the chamber means. The piston means may be biased to apply pressure on water contained in the chamber means. For example, the piston may be resiliently biased to apply pressure on water contained in the chamber means (e.g. by spring means). The piston means may be constrained to have a predetermined stroke-length within the chamber means.

The pressurisation means may be configured to apply a pressure below the pressure of the water supply. In this way, water received from the water supply whilst the valve means is open will overcome the pressurisation means and refill the chamber means.

The sensor means may be configured to sense a rate of flow in the chamber means. The sensor means may be configured to track movement of the piston means relative to the chamber means. For example, the sensor means may be configured to provide an output in dependence upon the position of the piston means relative to the chamber means. Advantageously, the use of such sensor means for tracking movement of the piston means may avoid the need for complex flow or pressure sensors conventionally used to determined rates of flow in a flood detection system. In one embodiment, the sensor means provides a plurality of different outputs each corresponding to a different discrete position of the piston means relative to the chamber means. The sensor means may comprise one or more optical sensors. The control means may additionally be configured to determine a level of flow indicative of the volume of flow (e.g. based on the output from the sensor means). For example, the control means may be configured to determine a duration of flow. The controller may be configured to close the valve means to prevent flow from the inlet means to the outlet means if the level of flow exceeds a predetermined threshold level (e.g. a threshold duration). In this way, the control means may operate to distinguish between a volume of flow indicative of a genuine water demand and a volume of flow indicative of a flood event, and disconnect the inlet means from the water supply when a volume of flow indicative of a flood event is detected. The sensor means may provide an output signal which is representative of the duration of flow. For example, the signal may have a duration which corresponds to the duration of flow. In this case, the control means may comprise a timer for determining the duration of the signal and means for comparing the determined duration with a threshold time.

The control means may be selectively configurable at least between a first mode associated with a first threshold level and a second mode associated with a second threshold level which is different to the first threshold level. In this way, two levels of flood protection may be provided to suit different circumstances whilst allowing a certain level of water use in each level of protection.

The water supply may be a mains supply (e.g. high pressure supply). The valve means and/or sensor means may be located adjacent a primary supply of water in the building, e.g. mains inlet. In this way, water flows may be sensed and stopped upstream of water-using appliances and outlets (e.g. taps) in the building.

The sensor means, valve means and water storage means may be formed as a single unit for attachment to a water conduit. In this way, these system parts may be fitted in a single operation and at a single location in a building.

The system may further comprise a secondary valve means for controlling flow of water from a secondary water source (e.g. header tank of the type common in the U.K.). The controller may be configured to close the secondary valve means in the event that the output below the predetermined threshold rate occurs for at least a predetermined period of time. For example, the controller may be configured to close the secondary valve means when activating the alarm means. The control means may be configured to wirelessly communicate with a control module coupled to the secondary valve means.

In accordance with a second aspect of the present invention there is provided apparatus for use a system for controlling flow of water in a building, comprising: water storage means comprising: chamber means for storing water; and pressurisation means for pressurising water received in the chamber means; and sensor means for sensing a rate of flow in the system (e.g. in the chamber means), the sensor means being configured to provide an output representative of a rate of flow sensed.

The water storage means may be configured to provide a maximum volume of less than around 0.5 litres. In another embodiment, the water storage means is configured to provide a maximum volume of less than around 0.25 litres. In yet another embodiment, the water storage means may be configured to provide a maximum volume of less than around 0.15 litres. The maximum volume provided by the water storage means may be determined by the maximum capacity of the chamber means or by control means for limiting flow of water from the water storage means.

The water storage means may comprise water storage valve means for controlling flow of water into the chamber means. The water storage valve means may be configured to allow water to flow into the chamber means at a rate lower than water flows out of the chamber means. For example, the water supply valve means may comprise a two-way valve having a first configuration when water flows into the chamber means and a second configuration when water flows out of the chamber, the two-way valve acting to restrict flow in the first configuration relative to the second configuration. The two-way valve may be configured to move between the first and second configurations automatically in dependence upon which direction water is flowing through the two-way valve. For example, the two-way valve may comprise a moveable restriction which is forced by passing water to move from an inoperative configuration to an operative configuration when water flows in a first direction relative to the two-way valve, and from the operative configuration to the inoperative position when water flows in a second (e.g. opposed) direction.

The pressurisation means may comprise piston means movably housed in the chamber means. The piston means may be biased to apply pressure on water contained in the chamber means. For example, the piston may be resiliently biased to apply pressure on water contained in the chamber means (e.g. by spring means). The piston means may be constrained to have a predetermined stroke-length within the chamber means.

The pressurisation means may be configured to apply a pressure below the pressure of the water supply. In this way, water received at water supply pressure will overcome the pressurisation means to refill the chamber means.

The sensor means may be configured to track movement of the piston means relative to the chamber means. For example, the sensor means may be configured to provide an output in dependence upon the position of the piston means relative to the chamber means. In one embodiment, the sensor means provides a plurality of different outputs each corresponding to a different discrete position of the piston means relative to the chamber means. The sensor means may comprise one or more optical sensors.

An embodiment of the present invention will now be described by way of example with reference to the accompanying drawings, in which:
Figure 1 is an schematic view of a system embodying the present invention;
Figure 2A is a detailed schematic view of a component of the system of Figure 1;
Figure 2B is a cross-sectional schematic view of the component shown in Figure 2A along section A-A;
Figure 2C is a detailed cross-sectional schematic view of a part of the component shown in Figure 2B in a first configuration;
Figure 2D is a detailed cross-sectional schematic view of a part of the component shown in Figure 2B in a second configuration;
Figures 3A-3F are cross-sectional schematic views of the component shown in Figure 2B in a number of different configurations; and
Figure 4 is a flow chart illustrating operation of the system of Figure 1.

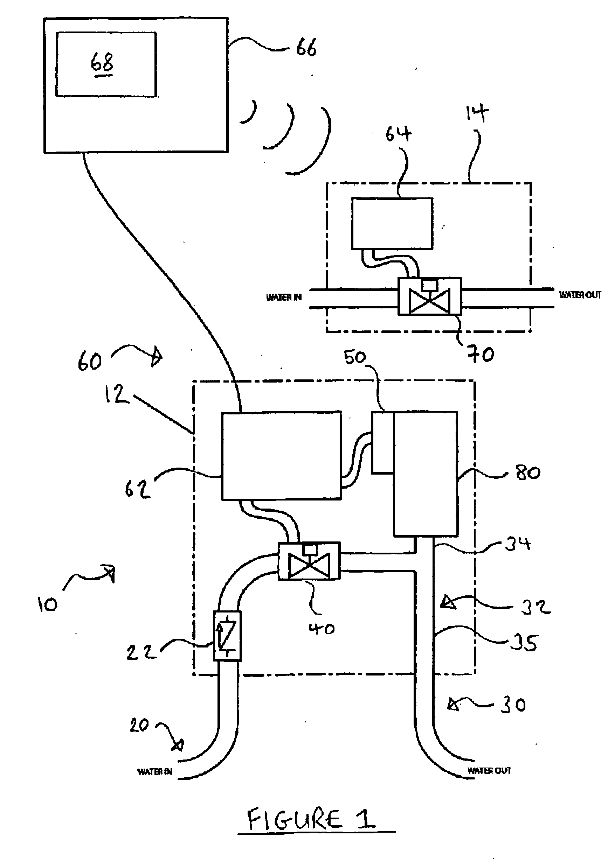

Figure 1 shows a flood protection system 10 for controlling flow of water in a building. System 10 comprises: inlet means 20 for connection to a mains water supply; outlet means 30 connected to the inlet means 20; primary solenoid valve 40 for controlling flow of water from the inlet means to the outlet means; sensor means 50 for sensing a rate of flow in the system 10; control means 60; and secondary solenoid valve 70 for controlling flow of water from a header tank (not shown).

Inlet means 20 includes a non-return valve 22 for preventing backflow of water. Outlet means 30 includes a bifurcated conduit 32 having a first branch 34 coupled to an accumulator 80 and a second branch 35 coupled to an internal plumbing system of a building.

Control means 60 including primary control circuitry 62 for controlling operation of primary solenoid valve 40, secondary control circuitry 64 for controlling operation of secondary solenoid valve 70 and a wall-mountable control unit 66. Control unit 66 is configured to allow communication between primary and secondary control circuitry 62, 64 and includes alarm means 68 comprising an LCD display configured to provide a visual alarm signal. As illustrated, inlet means 20, primary solenoid valve 40, sensor means 50, primary control circuitry 62 and outlet means 30 are housed in a first unit 12 for attachment to a conduit by a mains water supply to a building. Secondary solenoid valve 70 and secondary control circuitry 62 are housed in a second unit 14 for attachment to an outlet of a header tank connected to the outlet means 30. Control unit 66 is configured to be located in a convenient location in a building.

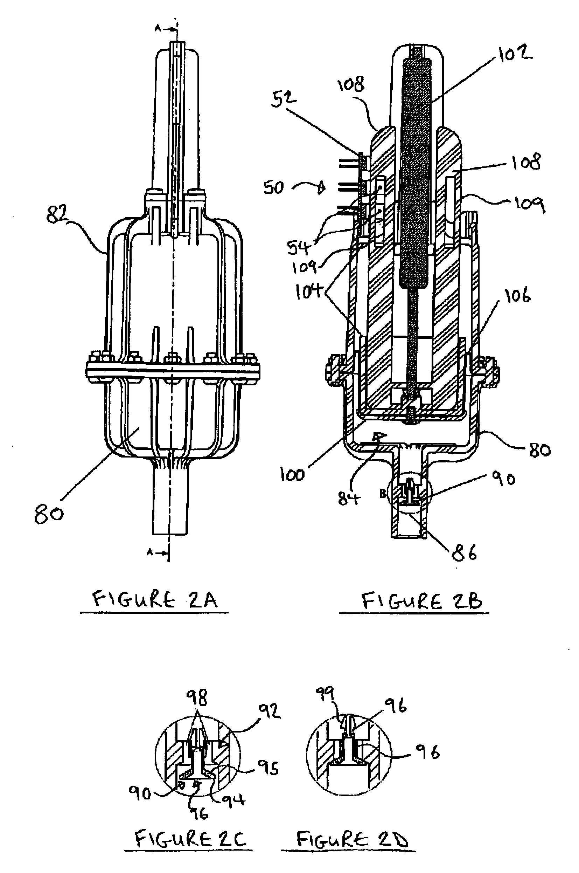

As shown in Figures 2A to 3F, accumulator 80 comprises a body 82 defining a chamber 84 for storing water received from the inlet means 20, chamber 84 includes an inlet/outlet 86 in fluid communication with branch 34. In order to control ingress of water into the chamber 84, inlet/outlet 86 includes a two-way valve 90. Two-way valve 90 includes a neck region 92 and a plug 94 moveably coupled in a collar 96 within the neck region 92. Plug 94 includes a tapered portion 95 and defines an aperture 96 extending therethrough. Plug 94 is moveable between an inoperative position (shown in Figure 2C) in which water may pass around tapered portion 95 and through passageways 98 in the neck region 92 and an operative position (shown in Figure 2D) in which the tapered portion 95 bears against passageways 98 in the neck region 92. In the operative position, water is only able to pass through aperture 96 in the plug 94, thereby restricting rate of flow through the valve 90. Plug 94 is freely moveable in collar 96 and is secured to the collar 96 by means of tapered portion 95 and resilient protuberant prongs 99.

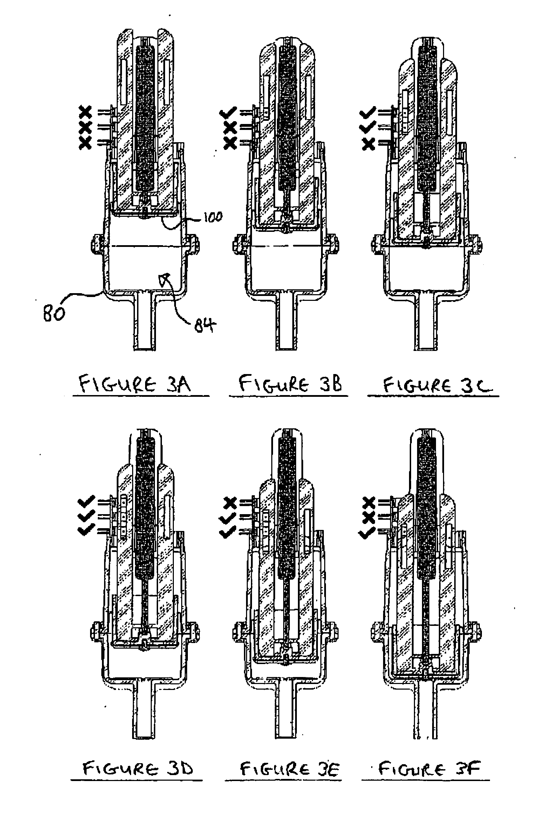

Accumulator 80 additionally comprises a piston assembly 100 movably housed in the chamber 84. The piston assembly 100 is biased to apply pressure on water contained in the chamber 84 by means of a resilient gas strut 102. Piston assembly 100 is configured to move between a first position (shown in Figure 3A) and a second position (shown in Figure 3F). The length of stroke of the piston assembly 100 is determined by piston stops 104. Gas strut 102 is configured to provide a pressure that is less than mains pressure throughout the stroke of the piston assembly 100.

A watertight seal 106 is provided to prevent water from escaping from the chamber 84 without passing first through inlet/outlet 86.

Sensor means 50 comprises a line of three optical switches 52 and three optical markers 54 mounted to opposed sides of body 82. Piston assembly 100 includes a fin 108 comprising a slot 109 through which light may pass. In use, movement of the piston assembly 100 relative to the chamber 84 results in different combinations of optical markers 54 being registered with slot 109. As illustrated in Figures 3A-3F, the optical sensors are able to determine when piston assembly 100 is in one of six discrete positions relative to the chamber 84 and provide an output indicative of which of the six discrete positions the piston assembly is in. Although an arrangement using optical sensors is illustrated in this embodiment, the position of the piston assembly may be tracked by means of other suitable sensors (e.g. by means of a variable resistor arrangement or hall effect sensor using a coil and magnet assembly).

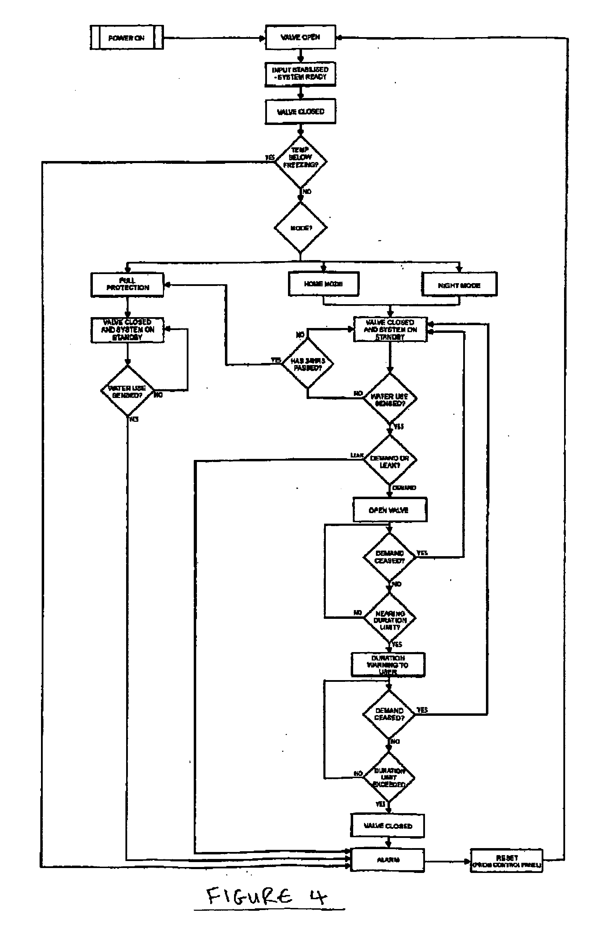

With reference to Figure 4, system 10 operates to maintain primary solenoid valve 40 closed until a genuine water demand has been determined. Once initially activated, the system will initially open primary solenoid valve 40 in order to charge accumulator 80 with water. Once chamber 84 is full (i.e. with piston assembly 100 in the first position) the primary solenoid valve 40 is closed and remains closed until opened by control means 60.

In use, water demand is detected by means of the output provided by sensor means 50. As described below, system 10 is operable in three modes. In each mode, accumulator 80 provides a volume of pressurised water (in this example, a maximum volume of 0.115 litres of pressurised water corresponding to the maximum capacity of chamber 84) which allows for low-level water loss (e.g. resulting from water evaporation from the system) or a very small genuine water demand made to the system without triggering an alarm.

### Full Protection Mode

In a first mode of operation ("Full Protection Mode"), control means 60 will activate alarm means 68 in the event that a change in the position of the piston assembly 100 is detected; primary solenoid valve 40 remains closed.

### Home Mode

In a second mode of operation ("Home Mode"), control means 60 will in the event that a change in the position assembly 100 is detected determine whether the loss of pressure in the system 10 is due to an authentic water demand or a leak by measuring the time in which it takes for the piston assembly 100 to move from the first position to the second position. If the time taken is above a predetermined time (i.e. indicative of a rate of flow below a predetermined rate), the control means 60 will activate alarm means 68 to indicate that a leak has been identified; primary solenoid valve 40 remains closed. If instead the time taken is below a predetermined time (i.e. indicative of a rate of flow above a predetermined rate), the control means 60 will open primary solenoid valve 40 to allow mains water to enter the system and satisfy the water demand. At the same time, accumulator 80 will re-fill with water. Once an authentic water demand has been determined, control means 60 times the duration of the water demand in order to determine whether the duration of the demand exceeds a predetermined duration. In the' event that the predetermined duration is not exceeded, primary solenoid valve 40 remains open until the water demand has ended. Once accumulator 80 is refilled fully, water demand is determined to have ended and primary solenoid valve 40 is returned to its closed configuration. In the event that the predetermined duration is exceeded, control means 60 will activate alarm means 68 and close primary and secondary solenoid valves 40, 70.

### Night Mode

In a third mode of operation ("Night Mode"), system 10 operates in the same way as Home Mode except that the predetermined duration for operation in Night Mode is shorter than the predetermined duration for operation in Home Mode. In this way, two levels of flood protection may be provided to suit different circumstances whilst allowing a certain level of water use in each level of protection.

## Claims

1. A system (10) for controlling flow of water in a building, comprising:
inlet means (20) for connection to a water supply;
outlet means (30) connected to the inlet means (20);
valve means (40) for controlling flow of water from the inlet means (20) to the outlet means (30), the valve means (40) being configured to maintain a closed configuration to prevent flow of water from the inlet means (20) to the outlet means (30) in the absence of a genuine water demand being determined by the system (10);
sensor means (50) for sensing a rate of flow in the system (10), the sensor means (50) being configured to provide an output representative of a rate of flow sensed; and
control means (60) configured to receive the output from the sensor means (50) and open the valve means (40) to allow flow from the inlet means (20) to the outlet means (30) if the received output from the sensor means (50) exceeds a predetermined threshold rate;
wherein the outlet means (30) comprises water storage means (60) for providing an initial supply of pressurised water to the building when the valve means (40) is in its closed configuration, the water storage means (80) comprising:
chamber means (84) for storing water received from the inlet means (20); and
pressurisation means (100) for pressurising water received in the chamber means (84).

2. A system (10) according to claim 1, further comprising alarm means (68) for providing an alarm signal when an output below the predetermined threshold rate has been detected by the control means (60).

3. A system (10) according to claim 2, wherein the control means (60) is configured to activate the alarm means (68) only if the output below the predetermined threshold rate occurs for at least a predetermined period of time.

4. A system (10) according to any of the preceding claims, wherein the outlet means (30) comprises a bifurcated conduit (32) having a first branch (39) connected to the water storage means (80) and a second branch (35) connected to an outlet aperture.

5. A system (10) according to any of the preceding claims, wherein the water storage means (80) comprises water storage valve means (90) for controlling flow of water into the chamber means (84).

6. A system (10) according to claim 5, wherein the water storage valve means (90) is configured to allow water to flow into the chamber means (84) at a rate lower than water flows out of the chamber means (84).

7. A system (10) according to any of the preceding claims, wherein the pressurisation means (100) is configured to apply a pressure below the pressure of the water supply.

8. A system (10) according to any of the preceding claims, wherein the pressurisation means (100) comprises piston means movably housed in the chamber means (84).

9. A system (10) according to claim 8, wherein the piston means is biased to apply pressure on water contained in the chamber means (84).

10. A system (10) according to claim 8 or claim 9, wherein the sensor means (50) is configured to provide an output in dependence upon the position of the piston means relative to the chamber means (84).

11. A system (10) according to claim 10, wherein the sensor means (50) provides a plurality of different outputs each corresponding to a different discrete position of the piston means relative to the chamber means (84).

12. A system (10) according to any of the preceding claims, wherein the sensor means (50) comprises one or more optical sensors (52).

13. A system (10) according to any of the preceding claims, wherein the control means (60) is additionally configured to determine a level of flow indicative of the volume of flow and to close the valve means (40) to prevent flow from the inlet means (20) to the outlet means (30) if the level of flow exceeds a predetermined threshold level.

14. A system (10) according to claim 13, wherein the control means (60) is selectively configurable at least between a first mode associated with a first threshold level and a second mode associated with a second threshold level which is different to the first threshold level.

15. A system (10) according to any of the preceding claims, further comprising a secondary valve means (70) for controlling flow of water from a secondary water source.

16. A system (10) according to claim 15, wherein the control means (60) is configured to close the secondary valve means (70) in the event that the output below the predetermined threshold rate occurs for at least a predetermined period of time.

17. Apparatus for use in a system for controlling flow of water in a building, comprising:
water storage means (80) for providing an initial supply of pressurised water to the building, the water storage means comprising:
chamber means (84) for storing water; and
pressurisation means (100) for pressurising water received in the chamber means (84); and
sensor means (50) for sensing a rate of flow in the system, the sensor means (50) being configured to provide an output representative of a rate of flow sensed.
